# EUROPEAN PATENT APPLICATION

(11) **EP 1 724 985 A2**
(43) Date of publication of application: **22.11.2006**
(21) Application number: 06009344.0
(22) Date of filing: 05.05.2006
(51) Int. Cl.: H04L 29/06

(54) **Portable terminal, streaming communication system, streaming communication method, and streaming communication program**

(30) Priority: 16.05.2005 JP 2005142498
(71) Applicant: NEC CORPORATION, Minato-ku, Tokyo 108-8001 (JP)
(72) Inventor: Hisatomi, Ryusuku, Tokyo 108-8001 (JP)
(74) Representative: Vossius & Partner

(57) **Abstract**

A portable terminal, a streaming communication system, a streaming communication method, and a streaming communication program can prevent the billing of packet charges when, during streaming communication, proper line speed cannot be secured and normal reproduction is not possible. A configuration is adopted such that, when executing streaming communication, comparison/determination unit 18 compares/determines a communication bit rate value that is acquired by means of communication bit rate value acquisition unit 16 and an effective bit rate value that is calculated by effective bit rate value calculation unit 17. Streaming communication is thus executed when the effective bit rate value is the greater value, and streaming communication is not executed when the communication bit rate value is the greater value.

## Description

The present invention relates to a portable terminal, a streaming communication system, a streaming communication method, and a streaming communication program, and more particularly to a portable terminal, streaming communication system, streaming communication method, and streaming communication program that determine whether to execute of streaming communication.

In recent years, moving picture data distribution or speech data distribution is being carried out by means of RTP (Real-time Transport Protocol) streaming in portable terminals such as portable telephones.

Streaming is the reproduction of data in which, when moving picture data or speech data are distributed from a network such as the Internet, a user reproduces the data during download of a data file rather than reproduces the data after completing the download of the data file. Moving picture data and speech data are generally composed of large volumes of data, and streaming, which allows such data to be reproduced without waiting for the download of the data file, is therefore extremely useful.

The known prior art relating to streaming includes the examples described below.

The technology disclosed in JP-A-2001-313937 has as its object the stable transmission and viewing of a moving picture image and proposes a server and gateway for converting moving picture data by optimum encoding parameters based on a communication bandwidth that varies due to the communication environment and the processing capabilities of terminals for data transmission to each terminal.

The object of the technology disclosed in JP-A-2002-319971 is to decrease the amount of buffering required before the start of reproduction on the receiving side so as to shorten the delay time before reproduction when transferring a plurality of items of continuous media data such as AV data, and this technology proposes a packet data repeater that, based on information such as synchronous reproduction information of continuous media data, calculates the transmission priority of each packet of media data that is in a synchronous relation and then transmits RTP packets to the receiving terminal based on this order of transmission priority.

The technology disclosed in JP-A-2002-176609 has as its object the uninterrupted reproduction of data that correspond to first and second reproduction periods (clips) that have been designated in one set of audio/video data (moving picture data) and proposes a data receiver/reproduction device that can issue a reproduction request to a server for the first and second clips.

UDP (User Datagram Protocol) is used in this type of RTP streaming, but UDP lacks a data resending capability and therefore requires that a proper line speed be secured when implementing streaming communication. This proper line speed is a value that is greater than the bit rate value of the content of the object that is reproduced. Failure to secure the proper line speed not only prevents the normal reproduction of the target content but also leaves the user liable to packet charges for data communication despite the reproduction failure, placing the user in a severely disadvantageous position.

Since it is impossible to determine from external appearances if the proper line speed for implementing streaming communication has been secured, the user is unable to judge if streaming communication can be executed, and as a result, users will tend to have negative impression regarding the use of streaming communication.

The above-described prior art assumes that communication is possible and therefore does not consider these problems, leaving the user without any means of determining whether streaming communication is possible.

The present invention was developed to solve these problems and therefore has as its object the provision of a portable terminal, a streaming communication system, a streaming communication method, and a streaming communication program that can avoid the billing of packet charges during streaming communication when proper line speed cannot be secured and normal reproduction is not possible.

The portable terminal according to the present invention implements streaming reproduction of content data that are transmitted from a content server by way of a radio line, and includes: communication means for transmitting and receiving data; communication state information holding means for acquiring and holding information regarding communication states; communication bit rate value acquisition means for acquiring from the content server a communication bit rate value, which is the bit rate value necessary for streaming reproduction of the content data; and effective bit rate value calculation means for calculating, based on the communication state information held by the communication state information holding means, the effective bit rate value that can be attained by the portable terminal; wherein, before implementing streaming communication, the portable terminal compares the communication bit rate value and the effective bit rate value; and then implements streaming communication when the effective bit rate value is greater than the communication bit rate value, but terminates communication with the content server and does not implement streaming communication when the communication bit rate value is greater than the effective bit rate value.

In this case, the effective bit rate value may be a value that is obtained by integrating the number of usable downlink slots of the portable terminal with the bit rate value per slot of the portable terminal.

Alternatively, the effective bit rate value may be a value that is obtained by subtracting a prescribed value from a value obtained by integrating the number of usable downlink slots of the portable terminal with the bit rate value per slot of the portable terminal.

In this case, the prescribed value may be a bit rate value that is required by an application that is used on the portable terminal.

The system according to the present invention is a streaming communication system for implementing, in a portable terminal, streaming reproduction of content data that are transmitted from a content server by way of a radio link; wherein the portable terminal includes: a communication means for transmitting and receiving data; a communication state information holding means for acquiring and holding information regarding communication states; a communication bit rate value acquisition means for acquiring from the content server a communication bit rate value, which is the bit rate value necessary for realizing streaming reproduction of the content data; and an effective bit rate value calculation means for calculating the effective bit rate value that can be attained by the portable terminal based on the communication state information that is held by the communication state holding means; wherein the content server includes content data and content data control information that is attached to and that correspond to the content data; wherein, when implementing streaming communication of the content data, the portable terminal issues an acquisition request for the content data to the content server by way of the communication means; the content server sends a response to the acquisition request for the content data and for the content data control information to the portable terminal; and the portable terminal uses the communication bit rate value acquisition means to acquire the communication bit rate value from the content data control information, uses the effective bit rate value calculation means to calculate the effective bit rate value that the portable terminal can attain, compares/determines the communication bit rate value and the effective bit rate value, and implements streaming communication when the effective bit rate value is greater than the communication bit rate value, but terminates communication with the content server and does not implement the streaming communication when the communication bit rate value is greater than the effective bit rate value.

In this case, the effective bit rate value may be a value obtained by integrating the number of usable downlink slots of the portable terminal with the bit rate value per slot of the portable terminal.

Alternatively, the effective bit rate value may be a value obtained by subtracting a prescribed value from a value that is obtained by integrating the number of usable downlink slots of the portable terminal with the bit rate value per slot of the portable terminal.

In this case, the prescribed value may be a bit rate value that is required by the application that is used on the portable terminal.

The streaming communication method of the present invention is a streaming communication method in which streaming reproduction of content data that are transmitted from a content server by way of a radio link is realized in the portable terminal, wherein the streaming communication method includes: a first step in the portable terminal of issuing an acquisition request to the content server for the content data from the portable terminal; a second step in the content server of transmitting from the content server to the portable terminal a response to the acquisition request for the content data in the first step and for the bit rate value of the content data; a third step in the portable terminal of calculating the effective bit rate value that can be attained in the portable terminal based on the communication state to the radio line; a fourth step of comparing/determining the bit rate value of the content data that is obtained in the second step with the effective bit rate value that is obtained in the third step; a fifth step of executing streaming reproduction of the content data when the effective bit rate value is determined to be greater than the bit rate value of the content data in the fourth step; and a sixth step of terminating communication with the content server when the bit rate value of the content data is determined to be greater than the effective bit rate value in the fourth step.

In this case, the method may further include after the sixth step a seventh step of displaying an indication that execution of the streaming communication is impossible.

In addition, the third step may also be a step for calculating an effective bit rate value that can be attained by the portable terminal by integrating the number of usable downlink slots of the portable terminal with the bit rate value per slot of the portable terminal.

Alternatively, the third step may also be a step for calculating the effective bit rate value that can be attained by the portable terminal by subtracting a prescribed value from a value obtained by integrating the number of usable downlink slots of the portable terminal with the bit rate value per slot of the portable terminal.

The program of the present invention is a streaming communication program for, in a communication system that implements in a portable terminal streaming reproduction of content data that are transmitted from a content server by way of a radio line, bringing about the execution of: a first process in the portable terminal of issuing an acquisition request to the content server for the content data from the portable terminal; a second process in the content server of transmitting to the portable terminal from the content server a response to the acquisition request for the content data in the first process and for bit rate value of the content data; a third process in the portable terminal of calculating the effective bit rate value that can be attained by the portable terminal based on the communication state with the radio link; a fourth process of comparing/determining the bit rate value of the content data that was obtained in the second process with the effective bit rate value that was obtained in the third process; a fifth process of implementing streaming reproduction of the content data when the effective bit rate value is determined to be greater than the bit rate value of the content data in the fourth step; and a sixth process of terminating communication with the content server when the bit rate value of the content data is determined to be greater than the effective bit rate value in the fourth process.

In this case, a seventh process may be executed after the sixth process for displaying an indication that the streaming communication was not possible.

In addition, the third process may be a process of calculating an effective bit rate value that can be attained by the portable terminal by integrating the number of usable downlink slots of the portable terminal with the bit rate value per slot of the portable terminal.

Alternatively, the third process may be a process of calculating the effective bit rate value that can be attained by the portable terminal by subtracting a prescribed value from a value that is obtained by integrating the number of usable downlink slots of the portable terminal with the bit rate value per slot of the portable terminal.

According to the present invention, streaming communication is implemented when streaming communication can be realized, and streaming communication is not implemented when streaming communication cannot be realized, whereby communication processes can be omitted and unnecessary packet communication eliminated to provide a benefit to the user.

Explanation next regards an embodiment of the present invention with reference to the accompanying figures.
FIG. 1 shows a communication system according to the first embodiment;
FIG. 2 shows the flow of the streaming communication process control of the present embodiment; and
FIG. 3 shows a bit rate coefficient conversion table.

### Communication System

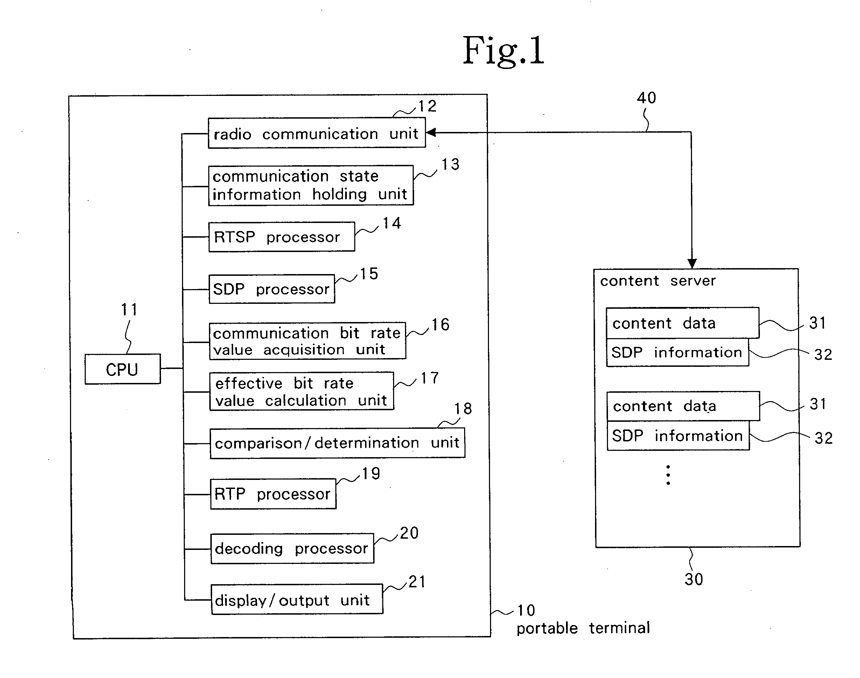

The communication system of the present embodiment is composed of portable terminal 10 and content server 30, these components being connected together by radio link 40. In FIG. 1, in the interest of simplifying the explanation, a system configuration is shown in which portable terminal 10 and content server 30 are in one-to-one correspondence, but the system configuration is not limited to this form and may be of a configuration having one portable terminal 10 to a multiplicity of content servers 30 or a multiplicity of portable terminals 10 to a multiplicity of content servers 30.

### Portable Terminal

The communication system of the present embodiment includes: CPU 11, radio communication unit 12 as the communication means, communication state information holding unit 13 as the communication state information holding means; RTSP processor 14, SDP processor 15, communication bit rate value acquisition unit 16 as the communication bit rate value acquisition means, effective bit rate value calculation unit 17 as the effective bit rate value calculation means, and comparison/determination unit 18, RTP processor 19, decoding processor 20, and display/output unit 21.

CPU (Central Processing Unit) 11 controls each of the components that make up portable terminal 10.

Radio transmission unit 12 exchanges data with outside devices (in the present embodiment, content server 30) by way of radio link 40.

Communication state information holding unit 13 detects the CS value that is being used by radio transmission unit 12, and holds this CS value. In addition, communication state information holding unit 13 constantly detects the number of downlink slots that can be used by radio transmission unit 12 and holds this slot number. In addition, CS (Coding Scheme) is the coding system, and in this case it defines the packet transmission power per slot, i.e., the bit rate value. A downlink is a line in the downward direction (from the network to the user terminals) of the communication lines, and the number of downlink slots is the number of slots that one carrier (a portable terminal in the present embodiment) can use in downlinks in multi-slot communication.

RTSP processor 14 transmits RTSP packets to, and receives RTSP packets from content server 30. RTSP (Real Time Streaming Protocol) is prescribed in RFC 2326 and is the protocol for real-time transfer (streaming) of content data such as audio data or video data.

SDP processor 15 performs the process of analyzing SDP information 32 that is acquired from content server 30. SDP (Session Description Protocol) is prescribed in RFC2327, and is a protocol for describing data control information such as the compression mode or bit rate value (bandwidth information).

Communication bit rate value acquisition unit 16 acquires the bit rate value (hereinbelow noted as "communication bit rate value") that is required for streaming reproduction of content data 31, and holds this communication bit rate value. This communication bit rate value is explained in above-described SDP information 32, and communication bit rate value acquisition unit 16 acquires the communication bit rate value by obtaining the analysis results of SDP information that was done by SDP processor 15.

Effective bit rate value calculation unit 17 calculates and holds the "effective bit rate value" that portable terminal 10 is actually capable of realizing and attaining based on the CS value and downlink slot number that are held by communication state information holding unit 13. This effective bit rate value is calculated by integrating the bit rate coefficient that corresponds to the CS value and the number of downlink slots. The calculation process for this effective bit rate value is described in detail herein below.

Comparison/determination unit 18 compares/determines the communication bit rate value that is held by communication bit rate value acquisition unit 16 with the effective bit rate value that is held by effective bit rate value calculation unit 17 and transmits the results of this comparison/determination to CPU 11.

RTP processor 19 analyzes the RTP packets that are acquired from content server 30 to convert to coded frame data and then transmits these data to decoding processor 20. RTP (Real-Time Protocol) is protocol prescribed in RFC 1889 for the real-time transfer (streaming) of content data such as audio data or video data.

Decoding processor 20 acquires the frame data from RTP processor 19 and performs a decoding process on these data.

Display/output unit 21 controls a display device or speaker sound source to reproduce content data 31 that have been decoded in decoding processor 20. When content data 31 cannot be reproduced, display/output unit 21 conveys this information to the user.

### Content Server

Content server 30 has content data 31 for streaming. Content data 31 are conferred SDP information 32 that corresponds to each item of content data 31. This SDP information 32 is data control information such as the bit rate value (bandwidth information) or compression mode that is described in the SDP. One content server 30 may have a plurality of items of content data 31.

### Radio Links

Radio links 40 conform to a GPRS (General Packet Radio System). GPRS is a wireless packet system based on the portable telephone transmission method of GSM (Global System for Mobile Communication).

### Streaming Communication Processing Control

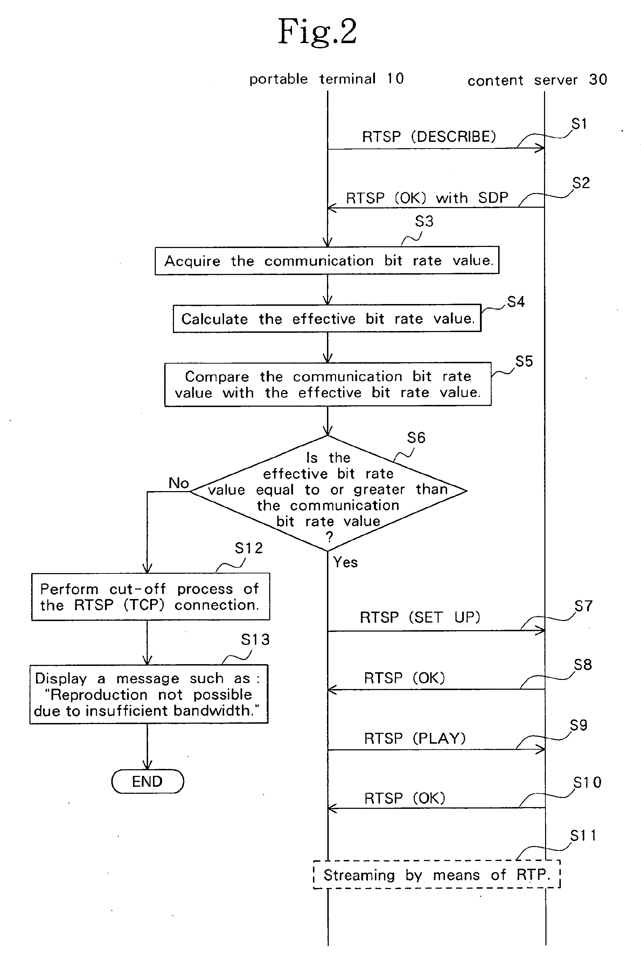

Explanation next regards streaming communication processing control in the communication system of the present embodiment with reference to FIG. 2. FIG. 2 shows the flow of streaming communication processing control in the communication system of the present embodiment.

When portable terminal 10 accesses content data 31 that belongs to content server 30, RTSP processor 14 of portable terminal 10 transmits a DESCRIBE message of RTSP packets to content server 30 (Step S1).

Upon receiving the DESCRIBE message from portable terminal 10, content server 30 transmits an OK response in RTSP packets to portable terminal 10 as the response to this message (Step S2). At the time of the RTSP packet transmission of this OK response, content server 30 also transmits, together with the OK response, SDP information 32 which describes data control information such as the compression mode and bit rate value (bandwidth information) of content data 31 that are the object of communication.

In the above-described SDP information, the bit rate value of the content data (bandwidth information) is described in the format "b=<modifier>:<bandwidth-value>", and the bit rate value is described in units of kbps (kilobits per second) in the location of this <bandwidth-value>.

Upon receiving the OK response from content server 30, CPU 11 of portable terminal 10 determines whether to execute streaming communication of the target content. More specifically, CPU 11 acquires the "communication bit rate value" and the "effective bit rate value" (Steps S3 and S4), compares/determines the two values (Step S5), and uses the result of this comparison/determination to determine whether to execute streaming communication.

The following explanation regards the details of the execution/determination processes of streaming communication.

In Step S3, the "communication bit rate value," which is one of the determination criteria in the determination process, is acquired. The communication bit rate value is the bit rate value that is required for streaming reproduction of the content data.

The communication bit rate value is acquired by means the process of analyzing SDP information 32 that is sent in together with the response message in Step S2. More specifically, SDP information 32 that has been acquired is analyzed in SDP processor 15, and the bit rate value that is obtained as a result is acquired and held in communication bit rate value acquisition unit 16 as the "communication bit rate value."

In Step S4, the "effective bit rate value," which is the other determination criteria in the determination process, is calculated. The effective bit rate value is the bit rate value that can be realized and attained by portable terminal 10.

Explanation next regards the details of the process for calculating the effective bit rate value. Effective bit rate value calculation unit 17 of portable terminal 10 first acquires the CS value and the number of downlink slots of portable terminal 10 from communication state information holding unit 13. Effective bit rate value calculation unit 17 next uses the bit rate coefficient conversion table that is stored in effective bit rate value calculation unit 17 to find the bit rate coefficient that corresponds to the CS value. The bit rate coefficient that is obtained is then integrated with the downlink slot number to calculate the effective bit rate value.

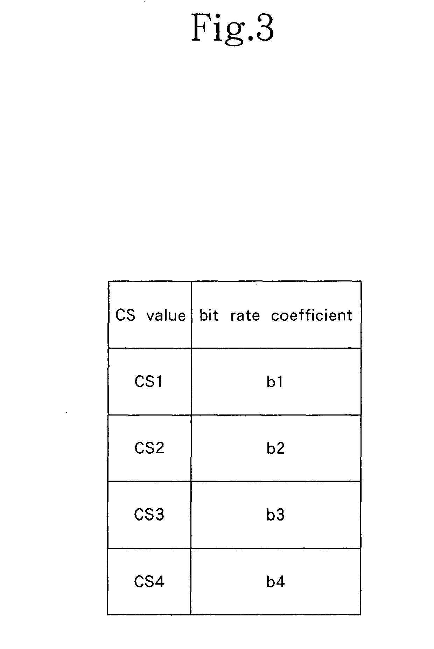

FIG. 3 shows an example of the bit rate coefficient conversion table. Each of the bit rate coefficients that are designated in the bit rate coefficient conversion table indicates the effective bit rate value in terms of the IP packet level when the number of usable downlink slots is "1." Accordingly, multiplying together the bit rate coefficient and the downlink slot number yields the effective bit rate value in terms of the IP packet level at that time (time of the calculation process).

In Step S5, the "communication bit rate value" that was obtained in Step S3 is compared/determined with the "effective bit rate value" that was obtained in Step S4, and based on the result of this determination, it is determined whether to execute the streaming communication or not. More specifically, the communication bit rate value that is held in communication bit rate value acquisition unit 16 and the effective bit rate value that is held in effective bit rate value calculation unit 17 are compared/determined in comparison/determination unit 18 of portable terminal 10, and the results of comparison/determination are transmitted to CPU 11.

If, as a result of the comparison/determination in Step S5, the effective bit rate value is found to be greater than the communication bit rate value ("Yes" in Step S6), it is then determined that an adequate line speed can be secured for carrying streaming communication without problems, and RTSP processor 14 therefore transmits a SETUP message by RTSP packets to content server 30 (Step S7). Content server 30 transmits an OK response corresponding to this SETUP message by RTSP packets to portable terminal 10 (Step S8).

After receiving this OK response, RTSP processor 14 of portable terminal 10 transmits a PLAY message containing relevant content data 31 by RTSP packets to content server 30 (Step S9). Content server 30 transmits an OK response in response to the PLAY message by RTSP packets (Step S10). Content server 30 further transmits content data 31 by RTP packets.

Upon receiving content data 31 by RTP packets, portable terminal 10 analyzes the received RTP packets in RTP processor 19, converts the RTP packets to coded frame data, and sends these coded frame data to decoding processor 20. Decoding processor 20 acquires the frame data from RTP processor 19, and performs a decoding process upon these data. Display/output unit 21 then controls a display or speaker sound source to reproduce content data 31 that have been decoded in decoding processor 20. In this way, reproduction of the content data 31 is carried out by streaming communication (Step S11).

On the other hand, if the results of the comparison/determination in Step S5 indicate that the effective bit rate value is smaller than the communication bit rate value ("No" in Step S6), it is determined that adequate line speed is not secured to realize streaming communication and that the reproduction of content data 31 therefore cannot be realized, whereby the RTSP (TCP) connection with content server 30 is cut off (Step S12). Display/output unit 21 is further used to display the message "Reproduction not possible due to insufficient bandwidth" to notify the user that reproduction is not possible, and processing will not occur.

When implementing streaming communication by means of the above-described process in the streaming communication processing control in the communication system of the present embodiment, it is first determined whether streaming communication is possible or not, following which streaming communication is executed when streaming communication is possible, and streaming communication processing will not occur when streaming communication is not possible, whereby the user can benefit by avoiding the pointless execution of packet communication.

Although a specific protocol and method were presented as the communication protocol and communication method in the above-described embodiment, the communication system of the present embodiment is not limited to the above-described communication protocol and communication method and can use various other protocols and methods. For example, EGPRS (Enhanced General Packet Radio System), which is a more developed form of GPRS, may be used instead of GPRS.

In the above-described embodiment, portable terminal 10 may be a portable telephone, or may be a personal computer that is connected to a network by a radio link.

Still further, although a value obtained by integrating a bit rate coefficient with the number of downlink slots was used as the effective bit rate value in the above-described embodiment, the "effective bit rate value" is more preferably a value calculated by subtracting a fixed correction value, i.e., a value obtained by integrating a bit rate coefficient and the number of downlink slots and then subtracting a fixed correction value (prescribed value) from this value. This fixed correction value is not limited by any particular numerical restrictions, but may be a bit rate value of an order that is required by another application. Calculating the effective bit rate value in this way prevents the execution of streaming communication at an effective bit rate value that is the limit of the bit rate value of portable terminal 10 and thus enables communication control with a margin.

Although the foregoing explanation of the embodiment relates to a communication system, this explanation of the present invention serves only as an example, and the present invention is not limited to only a communication system, but can also relate to a portable terminal used in the above-described communication system, a streaming communication method that is used in the above-described communication control process, and to a streaming communication program for causing the above-described communication process to be executed in a portable terminal and content server.

Embodiments relating to the above-described portable terminal, streaming communication system, streaming communication method, and streaming communication program are, strictly speaking, only embodiments and do not restrict the content of the present invention. As a result, the present invention is open to various modifications, amendments and abbreviations within the scope of the technical concept and viewpoint of the present invention. The present invention is restricted only by the range of the following patent claims or by forms that are limited in accordance with the claims.

## Claims

1. A portable terminal for implementing streaming reproduction of content data that are transmitted from a content server by way of a radio link, said portable terminal comprising:
communication means for transmitting and receiving data;
communication state information holding means for acquiring and holding information regarding communication states;
communication bit rate value acquisition means for acquiring from said content server a communication bit rate value, which is the bit rate value necessary for streaming reproduction of said content data; and
effective bit rate value calculation means for calculating, based on communication state information held by said communication state information holding means, the effective bit rate value that can be attained by said portable terminal;
wherein:
before implementing streaming communication, said portable terminal compares/determines said communication bit rate value and said effective bit rate value;
said portable terminal implements said streaming communication when said effective bit rate value is greater than said communication bit rate value; and
said portable terminal terminates communication with said content server and does not implement said streaming communication when said communication bit rate value is greater than said effective bit rate value.

2. The portable terminal according to claim 1, wherein said effective bit rate value is a value obtained by integrating the number of usable downlink slots of said portable terminal with the bit rate value per slot of said portable terminal.

3. The portable terminal according to claim 1, wherein said effective bit rate value is a value obtained by subtracting a prescribed value from a value obtained by integrating the number of usable downlink slots of said portable terminal with the bit rate value per slot of said portable terminal.

4. The portable terminal according to claim 3, wherein said prescribed value is the bit rate value that is required by an application of said portable terminal.

5. A streaming communication system for implementing in a portable terminal streaming reproduction of content data that are transmitted from a content server by way of a radio link; wherein:
said portable terminal comprises:
communication means for transmitting and receiving data;
communication state information holding means for acquiring and holding information regarding communication states;
a communication bit rate value acquisition means for acquiring from said content server a communication bit rate value, which is the bit rate value necessary for realizing streaming reproduction of said content data; and
an effective bit rate value calculation means for calculating the effective bit rate value that can be attained by said portable terminal based on the communication state information that is held by said communication state holding means;
wherein said content server has content data and content data control information that is attached to and that corresponds to said content data; and
wherein, when implementing streaming communication of said content data:
said portable terminal issues an acquisition request for said content data to said content server by way of said communication means;
said content server sends a response to the acquisition request to the portable terminal for said content data and said content data control information; and
said portable terminal uses said communication bit rate value acquisition means to acquire said communication bit rate value from said content data control information, uses said effective bit rate value calculation means to calculate the effective bit rate value that said portable terminal can attain, compares/determines said communication bit rate value and said effective bit rate value, and implements said streaming communication when said effective bit rate value is greater than said communication bit rate value, but terminates communication with said content server and does not implement said streaming communication when said communication bit rate value is greater than said effective bit rate value.

6. The streaming communication system according to claim 5, wherein said effective bit rate value is a value obtained by integrating the number of usable downlink slots of said portable terminal with the bit rate value per slot of said portable terminal.

7. The streaming communication system according to claim 5, wherein said effective bit rate value is a value obtained by subtracting a prescribed value from a value obtained by integrating the number of usable downlink slots of said portable terminal with the bit rate value per slot of said portable terminal.

8. The streaming communication system according to claim 7, wherein said prescribed value is the bit rate value that is required by an application running on said portable terminal.

9. A streaming communication method for implementing in a portable terminal streaming reproduction of content data that are transmitted from a content server by way of a radio line; said method comprising:
a first step in said portable terminal of issuing an acquisition request to said content server for said content data from said portable terminal;
a second step in said content server of transmitting from said content server to said portable terminal a response to the acquisition request for said content data in said first step and for a bit rate value of said content data;
a third step in said portable terminal of calculating the effective bit rate value that can be attained in said portable terminal based on the communication state with said radio link;
a fourth step of comparing/determining the bit rate value of said content data that is obtained in said second step with said effective bit rate value that is obtained in said third step;
a fifth step of executing streaming reproduction of said content data when the effective bit rate value is determined to be greater than the bit rate value of said content data in said fourth step; and
a sixth step of terminating communication with said content server when the bit rate value of said content data is determined to be greater than said effective bit rate value in said fourth step.

10. The streaming communication method according to claim 9, further comprising after said sixth step a seventh step of displaying an indication that execution of said streaming communication was impossible.

11. The streaming communication method according to claim 9 or claim 10, wherein said third step is a step of calculating an effective bit rate value that can be attained by said portable terminal by integrating the number of usable downlink slots of said portable terminal with the bit rate value per slot of said portable terminal.

12. The streaming communication method according to claim 9 or claim 10, wherein said third step is a step of calculating the effective bit rate value that can be attained by said portable terminal by subtracting a prescribed value from a value obtained by integrating the number of usable downlink slots of said portable terminal with the bit rate value per slot of said portable terminal.

13. A streaming communication program for, in a communication system to be implemented, in a portable terminal, streaming reproduction of content data that are transmitted from a content server by way of a radio link, causing the execution of:
a first process in said portable terminal of issuing an acquisition request for said content data from said portable terminal to said content server;
a second process in said content server of transmitting to said portable terminal from said content server a response to the acquisition request for said content data in said first process and for a bit rate value of said content data;
a third process in said portable terminal of calculating the effective bit rate value that can be attained by said portable terminal based on the communication state with said radio link;
a fourth process of comparing/determining the bit rate value of said content data that was obtained in said second process with said effective bit rate value that was obtained in said third process;
a fifth process of implementing streaming reproduction of said content data when said effective bit rate value is determined to be greater than the bit rate value of said content data in said fourth process; and
a sixth process of terminating communication with said content server when the bit rate value of said content data is determined to be greater than said effective bit rate value in said fourth process.

14. The streaming communication program according to claim 13, further causing the execution of a seventh process after said sixth process for displaying an indication that said streaming communication was not possible.

15. The streaming communication program according to claim 13 or claim 14, wherein said third process is a process of calculating an effective bit rate value that can be attained by said portable terminal by integrating the number of usable downlink slots of said portable terminal with the bit rate value per slot of said portable terminal.

16. The streaming communication program according to claim 13 or claim 14, wherein said third process is a process of calculating the effective bit rate value that can be attained by said portable terminal by subtracting a prescribed value from a value that is obtained by integrating the number of usable downlink slots of said portable terminal with the bit rate value per slot of said portable terminal.
